# EUROPEAN PATENT SPECIFICATION

(11) **EP 4 384 949 B1**
(45) Date of publication and mention of the grant of the patent: **02.12.2026**
(21) Application number: 22800203.6
(22) Date of filing: 05.10.2022
(51) Int. Cl.: G06N 3/006, G06N 3/0455, G06N 3/092

(54) **DEMONSTRATION-DRIVEN REINFORCEMENT LEARNING**
DEMONSTRATIONSGESTEUERTES VERSTÄRKUNGSLERNEN
APPRENTISSAGE PAR RENFORCEMENT PILOTÉ PAR DÉMONSTRATION

(30) Priority: 05.10.2021 US 202163252605 P
(43) Date of publication of application: 19.06.2024
(73) Proprietor: GDM Holding LLC, Mountain View, CA 94043 (US)
(72) Inventor: SUSHKOV, Oleg O., London N1C 4AG (GB); DAVCHEV, Todor Bozhinov, London N1C 4AG (GB); SCHOLZ, Jonathan Karl, London N1C 4AG (GB)
(74) Representative: Marks & Clerk GST
(86) International application number: PCT/EP2022/077706
(87) International publication number: WO 2023/057518

(56) References cited:
- T. DAVCHEV ET AL: "Wish you were here: hindsight goal selection for long-horizon dexterous manipulation", ARXIV.ORG CORNELL UNIVERSITY LIBRARY, 201 OLIN LIBRARY CORNELL UNIVERSITY ITHACA, NY 14853, 22 March 2022 (2022-03-22), XP091172463, DOI: 10.48550/arXiv.2112.00597
- ASHVIN NAIR ET AL: "Visual Reinforcement Learning with Imagined Goals", ARXIV.ORG, CORNELL UNIVERSITY LIBRARY, 201 OLIN LIBRARY CORNELL UNIVERSITY ITHACA, NY 14853, 12 July 2018 (2018-07-12), XP080998446
- MIN CHEOL-HUI ET AL: "End-to-end robot manipulation using demonstration-guided goal strategie", 2019 16TH INTERNATIONAL CONFERENCE ON UBIQUITOUS ROBOTS (UR), IEEE, 24 June 2019 (2019-06-24), pages 159 - 164, XP033580468, DOI: 10.1109/URAI.2019.8768699
- STADIE BRADLY C ET AL: "One demonstration imitation learning", OPENREVIEW.NET: REV. 25 SEPT 2019, 25 September 2019 (2019-09-25), XP093003253, Retrieved from the Internet <URL:https://openreview.net/references/attachment?id=B1s994OvS&name=original_pdf> [retrieved on 20221129]
- YOUNGWOON LEE ET AL: "To Follow or not to Follow: Selective Imitation Learning from Observations", ARXIV.ORG, CORNELL UNIVERSITY LIBRARY, 201 OLIN LIBRARY CORNELL UNIVERSITY ITHACA, NY 14853, 16 December 2019 (2019-12-16), XP081559892
- SILVIU PITIS ET AL: "Maximum Entropy Gain Exploration for Long Horizon Multi-goal Reinforcement Learning", ARXIV.ORG, CORNELL UNIVERSITY LIBRARY, 201 OLIN LIBRARY CORNELL UNIVERSITY ITHACA, NY 14853, 6 July 2020 (2020-07-06), XP081716886
- TIANHONG DAI ET AL: "Episodic Self-Imitation Learning with Hindsight", ARXIV.ORG, CORNELL UNIVERSITY LIBRARY, 201 OLIN LIBRARY CORNELL UNIVERSITY ITHACA, NY 14853, 26 November 2020 (2020-11-26), XP081823510
- YUNFEI LI ET AL: "Solving Compositional Reinforcement Learning Problems via Task Reduction", ARXIV.ORG, CORNELL UNIVERSITY LIBRARY, 201 OLIN LIBRARY CORNELL UNIVERSITY ITHACA, NY 14853, 19 March 2021 (2021-03-19), XP081910667
- ALBERT ZHAN ET AL: "A Framework for Efficient Robotic Manipulation", ARXIV.ORG, CORNELL UNIVERSITY LIBRARY, 201 OLIN LIBRARY CORNELL UNIVERSITY ITHACA, NY 14853, 14 December 2020 (2020-12-14), XP081838492
- ASHVIN NAIR ET AL: "AWAC: Accelerating Online Reinforcement Learning with Offline Datasets", ARXIV.ORG, CORNELL UNIVERSITY LIBRARY, 201 OLIN LIBRARY CORNELL UNIVERSITY ITHACA, NY 14853, 24 April 2021 (2021-04-24), XP081924051

## Description

### CROSS-REFERENCE TO RELATED APPLICATION

This application claims priority to U.S. Provisional Application No. 63/252,605, filed on October 5, 2022.

### BACKGROUND

This specification relates to reinforcement learning.

In a reinforcement learning system, an agent interacts with an environment by performing actions that are selected by the reinforcement learning system in response to receiving observations that characterize the current state of the environment.

Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

In 2018, Nair et al. (Visual reinforcement learning with imagined goals; arXiv:1807.04742v2; doi: 10.48550/arXiv. 1807.04742) proposed an algorithm acquiring general-purpose skills by combining unsupervised representation learning and reinforcement learning of goal-conditioned policies so that, even if goals required at test-time are not known in advance, the agent performs a self-supervised "practice" phase where it imagines goals and attempts to achieve them.

### SUMMARY

This specification describes a system implemented as computer programs on one or more computers in one or more locations that trains a policy neural network through reinforcement learning and imitation learning in a data efficient manner. The invention is set out in the appended set of claims.

Once trained, the policy neural network is used to control an agent interacting with an environment by, at each of multiple time steps, processing data characterizing the current state of the environment at the time step (i.e., an "observation") to select an action to be performed by the agent. The action performed by the agent then causes the current state of the environment to transition into a new state. That is, at each time step, the state of the environment at the time step depends on the state of the environment at the previous time step and the action performed by the agent at the previous time step.

The subject matter described in this specification can be implemented in particular embodiments so as to realize one or more of the following advantages.

The techniques described in this specification allow a system to use a limited number of expert demonstrations to generate a large amount of new training data through hindsight goal selection and then train a goal-conditioned policy neural network on the new training data for a task. The described techniques which combine hindsight goal selection with expert demonstrations are more effective than other existing goal selection strategies that focus on modeling the behavior of the learning policy neural network, e.g., techniques that sample goal observations from trajectories produced by the agent during learning. Training using the described techniques results in a control policy for the agent for the task that is robust and allows the agent to more effectively perform the task. In some examples, the described techniques can train the policy neural network to achieve as much as three times higher accuracy on the most complex agent control tasks, such as long-horizon, sequential robotic control tasks, than the state-of-the-art with as few as 50 demonstrations.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example neural network training system.
FIG. 2 is a flow diagram of an example process for training a policy neural network.
FIG. 3 is an example illustration of training a policy neural network.
FIG. 4 shows a quantitative example of the performance gains that can be achieved by using the hindsight goal selection techniques described in this specification

Like reference numbers and designations in the various drawings indicate like elements.

### DETAILED DESCRIPTION

This specification describes a system implemented as computer programs on one or more computers in one or more locations that trains a policy neural network that is used to control an agent interacting with an environment by, at each of multiple time steps, processing data characterizing the current state of the environment at the time step (i.e., an "observation") to select an action to be performed by the agent, in order to cause the agent to perform a particular task.

For example, the agent can be any of a variety of robots, including single arm robots, dual arm robots, and other dexterous robot manipulators, e.g., robotic hands or arms. As another example, the agent can be another mechanical agent, e.g., an autonomous or semi-autonomous vehicle. The agent typically moves (e.g. navigates and/or changes its configuration) within the environment.

The observations may include, e.g., one or more of: images (such as ones captured by a camera and/or Lidar sensor), object position data, and other sensor data from sensors that capture observations as the agent interacts with the environment, for example sensor data from an image, distance, or position sensor or from an actuator. For example in the case of an articulated robot, the observations may include data characterizing the current state of the robot, e.g., one or more of: joint position, joint velocity, joint force, torque or acceleration, e.g., gravity-compensated torque feedback, and global or relative pose of an item held by the robot. In other words, the observations may similarly include one or more of the position, linear or angular velocity, force, torque or acceleration, and global or relative pose of one or more parts of the agent. The observations may be defined in 1, 2 or 3 dimensions, and may be absolute and/or relative observations. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

The actions may be control inputs to control the agent, e.g., torques for the joints of the robot or higher-level control commands, or the autonomous or semi-autonomous land, air, sea vehicle, e.g., torques to the control surface or other control elements of the vehicle or higher-level control commands.

In other words, the actions can include for example, position, velocity, or force/torque/acceleration data for one or more joints of a robot or parts of another mechanical agent. In addition to joints of a robot, the actions can include for example data defining a poise or twist of an end effector of the robot. Action data may additionally or alternatively include electronic control data such as motor control data, or more generally data for controlling one or more electronic devices within the environment the control of which has an effect on the observed state of the environment.

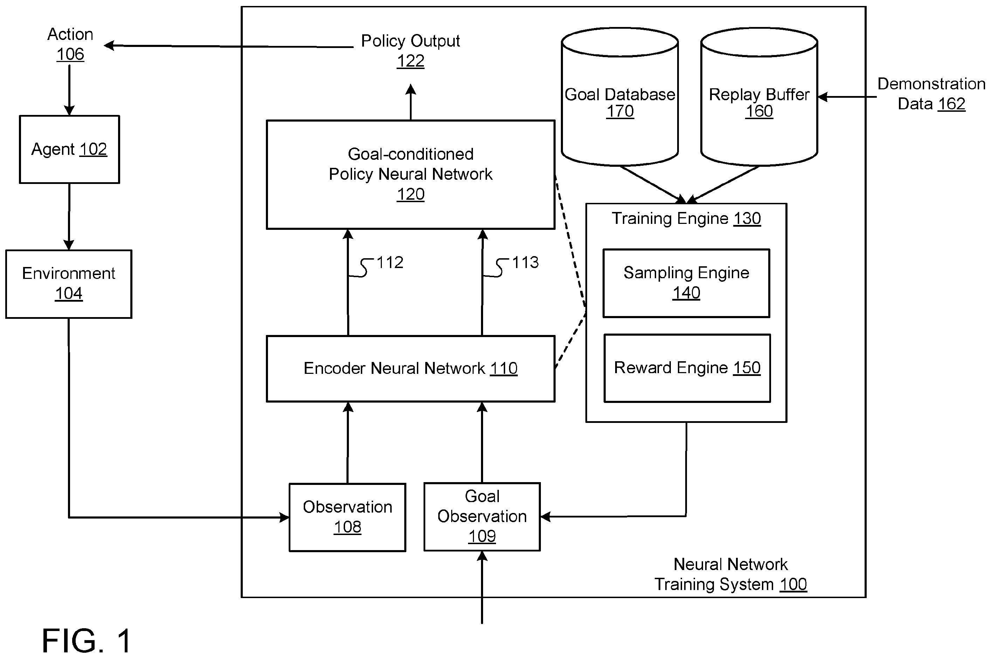

FIG. 1 shows an example neural network training system 100. The neural network training system 100 is an example of a system implemented as computer programs on one or more computers in one or more locations, in which the systems, components, and techniques described below can be implemented.

The neural network training system 100 trains a policy neural network 110 that is used to control an agent 102, i.e., to select actions 106 to be performed by the agent 102 while the agent 102 is interacting with an environment 104, through reinforcement and imitation learning in order to cause the agent 102 to perform particular tasks in the environment 104.

The policy neural network 120 is a neural network that is configured to receive a policy input and to process the policy input to generate a policy output 122 that defines an action to be performed by the agent 102.

Generally, the task to be performed by the agent 102 at any given time is specified by a goal observation 109 that characterizes a goal state of the environment 104, i.e., that characterizes the state that the environment should reach in order for the task to be successfully completed. For example, the goal observation 109 can be or can include an image of the environment 104 when the environment 104 is in the goal state.

The tasks can generally involve navigating in the environment 104 and/or interacting with one or more individual objects in the environment 104. For example, the tasks can include causing the agent 102 to navigate to different locations in the environment 104 (in which case the goal observations can be images of different locations in the environment), causing the agent to locate different objects (in which case the goal observations can be images of different objects that the robot should locate in the environment), causing the agent to pick up different objects or to move different objects to one or more specified locations (in which case the goal observations can be images of objects in particular positions in the environment), and so on.

As one particular example, in the cases where the agent 102 is a robot, such as a dexterous robot manipulator, the tasks can include connector insertion tasks which require the agent to insert different types of wire connectors into different types of sockets. As another particular example, the tasks can include dexterous manipulation tasks, including a valve rotation task, an object repositioning task, and a drawer opening task, and so on.

In particular, to select the action 106 to be performed by the agent 102 at any given time step, the system 100 receives a current observation 108 characterizing the current state that the environment 104 is in at the given time step. The observations 108 may include data captured by image generation unit(s) (e.g. cameras and/or Lidar sensors), other types of sensors, or both.

In some cases, both the current observation 108 and the goal observation 109 are from the same perspective while in other cases, the current observation 108 is from a different perspective than the goal observation 109. For example, the current observation 108 can be one or more first-person, ego-centric images of the environment, i.e., images captured by one or more cameras (or other image generation unit(s)) of the robot. The cameras may be mounted on the robot so as to move with the robot as the agent navigates in the environment. The goal observation 109 can be one or more third-person images of an agent, e.g., the robot or a demonstration agent, when the environment is in the goal state.

The system 100 generates an encoded representation 112 of the current observation 108 and an encoded representation 113 of the goal observation 109. Encoded representations, as used in this specification, are ordered collections of numerical values, e.g., vectors, and are generally of lower dimensionality than the corresponding observations.

The system 100 can generate the encoded representations by processing the corresponding observations using an encoder neural network 110. That is, the system 100 processes the current observation 108 using the encoder neural network 110 to generate the encoded representation 112 of the current observation 108 and processes the goal observation 109 using the encoder neural network 110 to generate the encoded representation 113 of the goal observation 109.

The encoder neural network 110 can have any appropriate architecture that allows the neural network 110 to map an observation to an encoded representation. For example, when the observations each include one or more images, the neural network 110 can be a convolutional neural network, i.e., a neural network that includes one or more convolutional neural network layers. In some implementations, the encoder neural network 110 can include one subnetwork that processes the current observation and another subnetwork (with the same architecture but possibly different parameter values) that processes the goal observation.

Instead of using a neural network to generate the encoded representations, in some implementations, the system 100 can alternatively use an engineered encoder that is configured to generate encoded representations of current observation 108, the goal observation 109, or both, that include engineered features in accordance with preprogrammed logic. For example, in the cases where the agent 102 is a robot, the system 100 can process the goal observation 109 using an engineered encoder to generate the encoded representation 113 of the goal observation 109 that is a vector concatenation of two or more of: a position or orientation of the robot, a representation of past robot configurations, a distance between a robot end effector and a target object, and so on.

The system 100 processes a policy input that includes (i) the encoded representation 112 of a current observation 108 characterizing the current state that the environment 104 is in at the given time step and (ii) the encoded representation 113 of the goal observation 109 characterizing the goal state using the policy neural network 120 to generate a policy output 122 that defines an action 106 to be performed by the agent 102 in response to the current observation 116.

Thus, at any given time step, the policy neural network 120 is conditioned not only on the current observation 108 characterizing the current state at the time step but also on the goal observation 109 characterizing the goal state. The policy neural network 120 is therefore also referred to as a "goal-conditioned policy neural network."

The policy neural network 120 can have any appropriate architecture that allows the neural network 110 to map two encoded representations to a policy output. For example, the policy neural network 110 can be a feedforward neural network, e.g., a multi-layer perceptron (MLP) or a recurrent neural network, that processes a concatenation of the two encoded representations to generate the policy output.

The system 100 then uses the policy output 122 to select the action 106 to be performed by the agent 102 in response to the current observation 108. To cause the agent to perform the selected action, the system 100 can for example pass an instruction or other control signal to a control system for the agent.

In one example, the policy output 122 include a respective Q value for each action in a set of actions. The system 100 can process the Q values (e.g., using a soft-max function) to generate a respective probability value for each action, which can be used to select the action, or can select the action with the highest Q value.

The Q value for an action is an estimate of a "return" that would result from the agent performing the action in response to the current observation and thereafter selecting future actions performed by the agent in accordance with current values of the policy neural network parameters.

A return refers to a cumulative measure of "rewards" received by the agent, for example, a time-discounted sum of rewards. As will be described below, during training, the system 100 can generate a respective reward at each time step, where the reward is specified by a scalar numerical value and characterizes, e.g., a progress of the agent towards completing an assigned task.

In another example, the policy output 122 includes a respective numerical probability value for each action in the set of actions. The system 100 can select the action, e.g., by sampling an action in accordance with the probability values for the actions, or by selecting the action with the highest probability value.

As another example, the policy output 122 can be an action vector that specifies commands, e.g., torques, to be applied to various controllable aspects, e.g., joints, of the robot. In a similar example, the policy output 122 can be a pose vector that specifies parameters of a target pose that an end effector of the robot should have.

As yet another example, in some cases, in order to allow for fine-grained control of the agent, the system 100 may treat the space of actions to be performed by the agent, i.e., the set of possible control inputs, as a continuous space. Such settings are referred to as continuous control settings. In these cases, the policy output 122 of the policy neural network can be the parameters of a multi-variate probability distribution over the space, e.g., the means and covariances of a multi-variate Normal distribution, and the action 106 may be selected as a sample from the multi-variate probability distribution.

Because of the manner in which the system 100 trains the policy neural network 120, the action 106 defined by the policy output 122 is an action that would bring the agent 102 closer to accomplishing the goal (or completing the task) specified by the goal observation 112 represented by the policy input.

The system 100 includes a training engine 130 that trains the policy neural network 120 and, in some cases, the encoder neural network 110 on training data. In other words, the training engine 130 trains the policy neural network 120 and, optionally, the encoder neural network 110 to determine trained values of model parameters of the policy neural network 120 and, optionally, the encoder neural network 110.

To assist in the training, the system 100 maintains a replay buffer 160 which stores training sequences generated as a consequence of the interaction of the agent 102 (or another agent) with the environment 104 (or another instance of the environment) for use in training the policy neural network 120.

Each training sequence stored in the replay buffer 160 can represent an episode of a specified task. An episode of a task is a sequence of multiple time steps during which the agent, which is controlled using the policy neural network 120, attempts to perform the specified task by causing the environment 104 to transition into the goal state characterized by the goal observation. For example, the task episode can continue for a predetermined number of time steps or until a reward is received that indicates that the task has been successfully completed.

Each training sequence stored in the replay buffer 160 includes at least a respective training observation at each of multiple time steps in the training sequence. The training observations characterize states of the environment while the agent interacts with the environment to attempt to perform the specified task. In some implementations, each training sequence can include a sequence of training transitions each corresponding to a respective time step. Each training transition can include: (i) a respective current observation characterizing a respective current state of the environment (the "training observation" mentioned above); (ii) a respective current action performed by the agent in response to the current observation; (iii) a respective next observation characterizing a respective next state of the environment; (iv) a goal observation characterizing a goal state of the environment; and (v) a reward received by the agent when the environment is in the state characterized by the current observation.

To facilitate efficient training even when rewards are sparse (e.g., in cases where only a minority subset of states of the environment may provide the reward), the system 100 obtains, e.g., as an upload from a user of the system or from another system through an application programming interface (API), demonstration data 162 that includes multiple demonstration sequences. The system 100 uses the demonstration data to supplement the training sequences stored in the replay buffer 160, by way of using the demonstration data 162 to relabel the training sequences to generate relabeled training sequences as new training data, which will then be used to train the policy neural network 120, e.g., in addition to the original training sequences, to determine trained values of the parameters of the policy neural network.

The demonstration data 162 can be generated as a consequence of the interaction of a demonstration agent, which can for example be an agent controlled by a fixed, already-learned export control policy or a human user such as a human expert, with the environment 104 to perform the specified task. The number of demonstration sequences in the demonstration data 162 is generally much smaller than the total number of training sequences that can be stored in the replay buffer 160. For example, while a total of 5K, 10K, 50K, or more training sequences can be stored in the replay buffer 160, the system need only 50, 100, or 500 demonstration sequences at the beginning of the training.

Like the training sequence mentioned above, each demonstration sequence includes at least a respective demonstration observation at each of a predetermined number of time steps in the demonstration sequence. The demonstration observations characterize states of the environment while a demonstrating agent interacts with the environment to perform the specified task. In some implementations, each demonstration sequence can include a sequence of demonstration transitions each corresponding to a respective time step. In some implementations, each demonstration transition can include: (i) a respective current observation characterizing a respective current state of the environment (the "demonstration observation" mentioned above); (ii) a respective current action performed by a demonstration agent in response to the current observation; and (iii) a goal observation characterizing a goal state of the environment. In some of these implementations, for each demonstration sequence, the goal state of the environment can be the final state of the environment at the completion of the demonstration sequence.

The system 100 also maintains a goal database 170 that stores goal observations characterizing the goal states of the environment. During training, the training engine 130 repeatedly samples goal observations 109 from the goal database 170 to provide to the encoder neural network 110. At each time step, the sampled goal observation 109 is processed by the encoder neural network 110 in addition to a current observation 108 to generate the encoded representations 112 and 113 that constitute the policy input to the policy neural network 120. The training engine 130 will generally sample one goal observation 108 for each episode of the specified task. That is, the goal observations included in each training sequence will generally be the same (i.e. the same for all training transitions (time steps) of a given training sequence; but different training sequences will include different goal observations).

Upon receiving the demonstration data 162, the system 100 can add demonstration observations characterizing the final, goal states of the environment in the demonstration sequences to the goal database 170. Then, as the agent 102 interacts with the environment during the training of the policy neural network 120 and the encoder neural network 110, the system 100 can continually update the goal database 170 to add training observations characterizing the final state of each training sequence during which the agent successfully interacted with the environment to reach the goal state of the environment as characterized by the goal observation for the training sequence. Although the specified task is completed in every successful training sequence, the exact observation of the final state may, and usually will, be at least somewhat different from the goal state on which the policy neural network 120 is conditioned. This is especially the case when the observation includes high resolution data, e.g., a high resolution image, or when the task is a dexterous manipulation task, e.g., a connector insertion task or another sequential task, or both. Thus a larger goal database 170 would be more beneficial (the more the goal observations, the better the understanding of the goal state of the specified task).

In particular, the training engine 130, by operating in tandem with a sampling engine 140 and a reward engine 150, uses a hindsight goal selection technique to relabel the training transitions stored in the replay buffer 160 by using "successful" demonstration sequences in the obtained demonstration data 162, i.e., where the demonstration agent has reached the final, goal state.

In hindsight goal selection, the training engine 130 can adjust each of one or more training transitions in a given training sequence from the replay buffer 160 by: (i) replacing the goal observation in the original training transition with a new goal observation determined by using the sampling engine 140 from the successful demonstration sequences, and (ii) replacing the reward in the original training transition (which is usually zero, except for when the training transition is the very last training transition in the given training sequence) with a new reward computed by using the reward engine 150. Thus by using hindsight goal selection, a given training sequence from the replay buffer 160 may be adjusted to have (i) more than one different, new goal observations (e.g. different goal observations for different ones of the training transitions) and (ii) more than one non-zero rewards over the sequence of training transitions included therein.

The reward engine 150 can compute the new reward as a goal-conditioned reward, i.e., a reward the value of which is dependent on a distance between the respective encoded representations of the current observation at each time step and the goal observation.

In some cases, the relabeled training transitions are then added to the replay buffer 160 as additional training data to supplement the original training transitions, while in other cases, the relabeled training transitions overwrite the existing, original training transitions when being added to the replay buffer 160.

Using hindsight goal selection enables the training engine 130 to efficiently and effectively train the policy neural network 120 through a combination of imitation learning (using demonstration data 162) and reinforcement learning (using trajectories stored in the replay buffer 160). The system 100 thus achieves efficient use of computational resources, e.g., memory, wall clock time, or both during training of the policy neural network 120 and the encoder neural network 110.

During this training, the training engine 130 controls the real agent 102 (or multiple different instances of the real agent 102) in the real-world environment 104.

In the description below, the term "agent" will be used to refer to an instance of the agent 102 when the training is performed in the real-world environment 104.

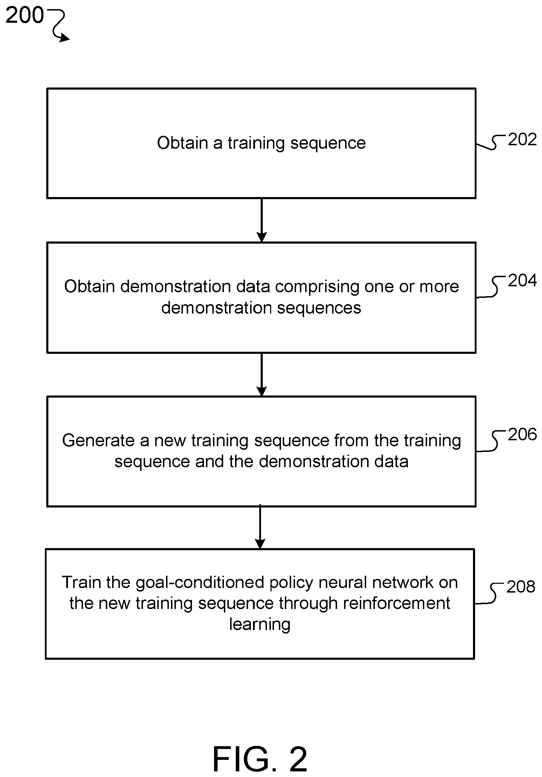

FIG. 2 is a flow diagram of an example process 200 for training a goal-conditioned policy neural network (or policy neural network for brevity). For convenience, the process 200 will be described as being performed by a system of one or more computers located in one or more locations. For example, a neural network training system, e.g., the neural network training system 100 of FIG.1, appropriately programmed, can perform the process 200.

The system obtains a training sequence generated as a consequence of the interaction of the agent with the environment (step 202). The training sequence can represent an episode of a specified task over a sequence of time steps during which the agent, which is controlled using the policy neural network, attempts to perform the specified task. For example, the task episode can continue for a predetermined number of time steps or until a reward is received that indicates that the task has been successfully completed.

In some implementations, the training sequence can include a sequence of training transitions each corresponding to a respective time step, where each training transition can include: (i) a respective current observation characterizing a respective current state of the environment (also referred to as a training observation); (ii) a respective current action performed by the agent in response to the current observation; (iii) a respective next observation characterizing a respective next state of the environment; (iv) a goal observation characterizing a goal state of the environment; and (v) a reward received by the agent when the environment is in the state characterized by the current observation.

The system obtains demonstration data that includes one or more demonstration sequences (step 204). In some implementations, each demonstration sequence in the obtained demonstration data can include a sequence of demonstration transitions each corresponding to a respective time step in a predetermined number of time steps of a task episode. Each demonstration transition can include: (i) a respective current observation characterizing a respective current state of the environment (also referred to as a demonstration observation); (ii) a respective current action performed by a demonstration agent in response to the current observation; and (iii) a goal observation characterizing a goal state of the environment.

The system generates a new training sequence from the training sequence and the demonstration data (step 206). Briefly, this can include using the demonstration data to determine one or more new goal observations each characterizing a respective goal state of the environment; and then generating the new training sequence that includes the respective training observations, but indicates that the policy neural network was conditioned on respective encoded representations of each of the new goal observations at one or more time steps in the training sequence. The new training sequence includes, for each training transition (time step) of the training sequence, the corresponding new goal observation. Alternatively, or additionally, it includes, for each time step of the training data, pointer data which points to a memory location storing the corresponding new goal observation.

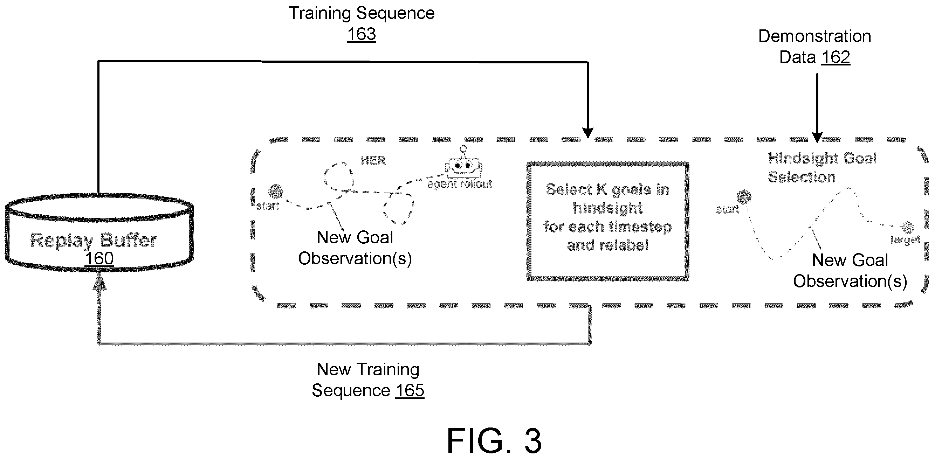

FIG. 3 is an example illustration of training a policy neural network. As illustrated, after obtaining a training sequence 163, e.g., by actually controlling the agent for an episode of the specified task or through sampling from the replay buffer 160, the system uses the obtained demonstration data 162 to generate K new goal observations. The K new goal observations will be used to replace the goal observation in the training sequence 163 to generate a new training sequence 165, which is then added back to the replay buffer 160. Note that this is different from the existing approach of hindsight experience replay ("HER"), as shown on the left hand side of FIG. 3. In hindsight experience replay, the system samples new goals observation only from the training sequence ("agent rollout") which has been generated as a consequence of the interaction of the agent controlled using the policy neural network (i.e., instead of a demonstration agent controlled using an expert control policy) with the environment.

The exact number K of new goal observations may be dependent on the complexity (or other requirements) of specified task. For example, the system can determine one new goal observation for a relatively simple environment navigation task, and can determine two or more new goal observations for a more complicated robotic manipulation task.

In some implementations, the system can determine each new goal observation by randomly sampling from all of the demonstration observations included in the one or more successful demonstration sequences in the obtained demonstration data. That is, the system randomly samples an arbitrary demonstration observation from all demonstration observations (corresponding to different time steps) included in an arbitrary one of the one or more successful demonstration sequences (where the demonstration agent has reached the final, goal state), and then uses the sampled demonstration observation as the new goal observation.

In some implementations, the system can determine each new goal observation by randomly sampling from an intersection over (i) all of the demonstration observations included in the one or more demonstration sequences in the obtained demonstration data and (ii) all of the training observations included in the training sequences stored in the replay buffer. This intersection can be determined as a combination of (i) a subset of all of the demonstration observations included in the one or more successful demonstration sequences and (ii) all of the training observations included in the training sequences stored in the replay buffer. The subset of demonstration observations include demonstration observations that are "close" to one or more of the training observations. Here, "close" is defined as there being a distance below a threshold distance between the respective encoded representations of a training observation and a demonstration observation that temporally aligns with (e.g., received at the same time step within the multiple time steps in a training sequence with) the training observation. These distances may be computed in various ways, such as with L1 distance, L2 distance, cosine similarity, etc.

In addition, the system generates one or more new, sparse rewards for the training sequence. By doing so the system can increase the number of non-zero rewards and therefore ease the difficult exploration problem. In particular, at each of the multiple time steps in the training sequence, the system generates a new reward that is equal to one for a respective training observation for the time step for which the distance between the encoded representation of the respective training observation (generated by processing the respective current observation using the encoder neural network) and the encoded representation of the new goal observation (generated by processing the new goal observation using the encoder neural network) is below a threshold distance ε. Thus, for any training observation having an encoded representation that is below the threshold distance ε with the encoded representation of the new goal observation, the transition that includes the training observation can have a reward that is equal to one. These distances may be computed in various ways, such as with L1 distance, L2 distance, cosine similarity, etc.

Once the new goals and the new rewards are generated, the system then proceeds to adjust the training sequence to generate the new training sequence that includes (i) the one or more new goal observations determined from the demonstration data, (ii) the new sparse rewards, and (iii) the plurality of training observations. For example, the system can relabel a training transition in the training sequence that includes: (i) a respective current observation characterizing a respective current state of the environment (also referred to as a training observation); (ii) a respective current action performed by the agent in response to the current observation; (iii) a respective next observation characterizing a respective next state of the environment; (iv) *a goal observation characterizing a goal state of the environment*; and (v) *a reward that is equal to zero* (because the environment is not in goal the state) as: (i) a respective current observation characterizing a respective current state of the environment (also referred to as a training observation); (ii) a respective current action performed by the agent in response to the current observation; (iii) a respective next observation characterizing a respective next state of the environment; (iv) *one of the new goal observations* (or, as mentioned above, another form of indication of the new goal observations); and (v) *a reward that is equal to one* (because the encoded representation of the training observation is close to the encoded representation of the new goal observation). The text in italics highlights what could be modified within each training transition through hindsight goal selection. In particular, by replacing the goal observation in the original training sequence with one of the new goal observations, the new training sequence indicates that the policy neural network was conditioned on an encoded representation of one of the new goal observations (and rather than the original goal observation) during interaction with the environment.

The system trains the policy neural network on the new training sequence through reinforcement learning (step 208). For reinforcement learning, the system can train the policy neural network on the respective rewards using any appropriate reinforcement learning technique, e.g., an actor-critic reinforcement learning technique, a policygradient based technique, and so on.

Conventionally, a reinforcement learning technique may adjust a policy neural network iteratively based, in each iteration, on data which includes one or more tuples from a training sequence comprising: (a) a current (first) observation of the environment (i.e. an observation corresponding to a certain time step); (b) an action taken at the time step in response to the current observation; (c) a (second) observation of the respective next state of the environment (i.e. for the respective next state of the time step) and (d) a reward. The reinforcement learning of technique in step 208 may be such a reinforcement learning technique, using as one of the tuples: (a) in the role of the current (first) observation, a concatenation of (1) an encoded representation (produced by the encoder neural network) of the current observation, and (2) an encoded representation (produced by the encoder neural network) of the goal observation indicated by the new training sequence; (b) the respective current action of the new training sequence, performed by the agent in response to the current observation; (c) in the role of the second observation, a concatenation of (1) an encoded representation (produced by the encoder neural network) of the second observation, and (2) an encoded representation (produced by the encoder neural network) of the goal observation indicated by the new training sequence; and (d) the respective reward of the new training sequence.

One example of a particular technique that can be used to train the policy neural network when it is configured to generate discrete policy outputs is the deterministic policy gradients (DPG) technique, described in David Silver, et al. Deterministic policy gradient algorithms. In International conference on machine learning, pp. 387-395. PMLR, 2014. Another example of a particular technique that can be used to train the policy neural network when it is configured to generate continuous policy outputs is the stochastic value-gradient (SVG) technique, described Nicolas Heess, et al. Learning continuous control policies by stochastic value gradients. In Advances in Neural Information Processing Systems, volume 28. Curran Associates, Inc., 2015.

In some cases, the system repeatedly performs the process 200 for each of a batch of multiple training sequences stored in the replay buffer and then uses the reinforcement learning techniques to update the parameters of the policy neural network based on the rewards in the training sequences in the batch.

The system also trains the policy neural network on the demonstration data through imitation learning. For imitation learning, the system can train the policy neural network on a supervised objective using the successful demonstration sequences in the demonstration data. For each demonstration transition in a given successful demonstration sequence, the imitation learning optimizes a loss of the policy neural network that is computed as a difference between (i) an action selected by using the policy output generated by the policy neural network from processing a policy input that includes the respective encoded representations of the current observation and the goal observation included in the demonstration transition and (ii) the respective current action performed by a demonstration agent included in the demonstration transition. For example, the difference between the action selected by using the policy output and the actual action performed by the demonstration agent can be determined by evaluating a L2 loss function, a binary cross entropy loss function, or both.

In some cases, for the given successful demonstration sequence, the imitation learning loss can be annealed throughout the training to allow the policy neural network to outperform the expert control policy for the demonstration agent.

In some cases, weighting down the reinforcement learning loss, imitation learning loss, or both associated with intermediate training transitions in each training sequence may improve the speed of training. For example, the system can use a task progress-based function to downscale the losses (e.g., by multiplying the losses with a weight that is below 1.0) associated with actions performed in response to intermediate observations characterizing intermediate states of the environment for the specified task (i.e., non-terminal states of the environment that precede the final, goal state in an episode of the specified task).

In some cases, while training the policy neural network on the training sequences, e.g., during a combination of the reinforcement learning by performing iterations of the process 200 and the imitation learning by using the successful demonstration sequences, the system holds the values of the parameters of the encoder neural network fixed, i.e., to the values that were determined from the training of the encoder neural network. In some other cases, the system backpropagates gradients through the policy neural network and into the encoder neural network to train the encoder neural network jointly with the policy neural network.

In some cases, the training of the encoder neural network can make use of contrastive learning-based techniques to enable the encoder neural network to generate more useful (e.g., more informative and more robust) encoded representations. One example of a technique that can be used to train the encoder neural network is the temporal cycle consistency (TCC) technique, described in Debidatta Dwibedi, et al., Temporal cycle-consistency learning. In Proceedings of the IEEE/CVF Conference on Computer Vision and Pattern Recognition, pp. 1801-1810, 2019.

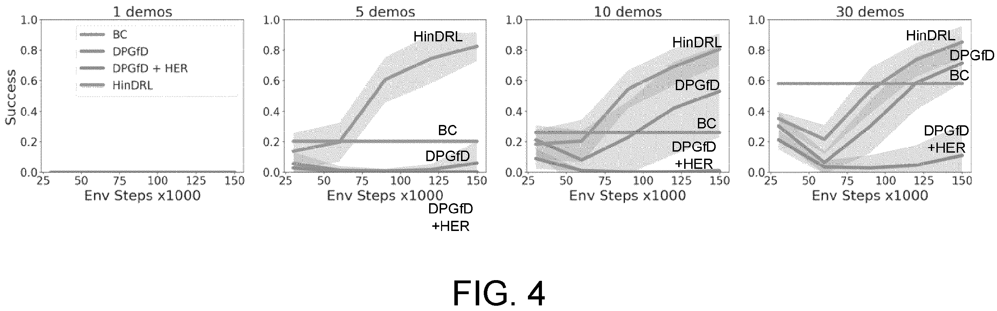

FIG. 4 shows a quantitative example of the performance gains that can be achieved by using the hindsight goal selection techniques described in this specification. Specifically, FIG. 4 shows four plots of results that can be achieved by using the hindsight goal selection techniques together with 1, 5, 10, and 30 demonstration sequences, respectively, to train a policy neural network on a "Bring Near and Orient" task. The "Bring Near and Orient" task is a dual-arm robotic manipulation task where a robotic agent needs to reach and grasp the two objects, e.g., cables, and then to position and reorient them within a certain threshold, e.g., to align both tips of the cables. Each plot shows the overall achieved accuracy (or success rate) during training.

It can be appreciated that, when more than one demonstration sequences are used, using HinDRL (corresponding to the hindsight goal selection techniques described in this specification) to train the robotic agent consistently outperforms the existing training techniques that use (1) a Behavior Cloning (BC) algorithm, (2) a demonstration-driven deep-RL algorithm (the DPGfD algorithm described in Mel Vecerik, et al. A practical approach to insertion with variable socket position using deep reinforcement learning. In 2019 international conference on robotics and automation (ICRA), pp. 754-760. IEEE, 2019), or (3) a demonstration-driven deep-RL algorithm (the DPGfD algorithm) combined with hindsight experience replay (HER) (described in Marcin Andrychowicz, et al. Hindsight experience replay. Advances in neural information processing systems, 30, 2017).

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of protection defined by the claims, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be excised from the combination, and the combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the processes depicted in the accompanying figures do not necessarily require the particular order shown, or sequential order, to achieve desirable results. In some cases, multitasking and parallel processing may be advantageous.

## Claims

1. A computer-implemented method of training a reinforcement learning system comprising a mechanical agent and a goal-conditioned policy neural network to select actions to be performed by the mechanical agent interacting with a real-world environment to perform a particular task, the method comprising:
obtaining (202) a training sequence comprising a respective training observation at each of a plurality of time steps, wherein each training observation is received as a result of the mechanical agent interacting with the real-world environment by being controlled using the goal-conditioned policy neural network that has a plurality of policy parameters, causing the current state of the real-world environment to transition into a new state, wherein the goal-conditioned policy neural network is configured to, at each of the plurality of time steps:
receive a policy input comprising an encoded representation of a current observation characterizing a current state of the real-world environment at the time step and an encoded representation of a goal observation characterizing a goal state that the real-world environment should reach in order for the task to be successfully completed, and
process the policy input in accordance with the policy parameters to generate a policy output that defines an action to be performed by the mechanical agent in response to the current observation and the goal observation;
obtaining (204) demonstration data comprising one or more demonstration sequences, each demonstration sequence comprising a plurality of demonstration observations characterizing states of the real-world environment while a demonstrating agent interacts with the real-world environment;
generating (206) a new training sequence from the training sequence and the demonstration data, comprising:
using the demonstration data to determine one or more new goal observations each being one of the demonstration observations characterizing a respective goal state of the real-world environment in the one or more demonstration sequences, and
generating the new training sequence that includes the respective training observations but indicates that the goal-conditioned policy neural network was conditioned on respective encoded representations of each of the one or more new goal observations at one or more time steps in the training sequence, by including, for each of the one of more time steps, the corresponding new goal observation or pointer data which points to a memory location storing the corresponding new goal observation; and
training (208) the goal-conditioned policy neural network on the new training sequence through reinforcement learning,
wherein every observation comprises data from one or more sensors configured to sense the real-world environment.

2. The method of claim 1, wherein obtaining (202) the training sequence comprising the respective training observations at each of the plurality of time steps comprises:
controlling the mechanical agent using the goal-conditioned policy neural network to attempt to cause the real-world environment to transition into the goal state **characterized by** the goal observation.

3. The method of any one of claims 1-2, wherein encoded representations of observations of the real-world environment in the policy input are generated by processing the observations using an encoder neural network, and optionally
further comprising training the encoder neural network using contrastive learning-based training techniques.

4. The method of any one of claims 1-3, further comprising training the goal-conditioned policy neural network on the obtained training sequence through reinforcement learning.

5. The method of any one of claims 1-4, wherein training (208) the goal-conditioned policy neural network through reinforcement learning comprises using a policy gradient technique.

6. The method of any one of claims 1-5, further comprising training the goal-conditioned policy neural network through imitation learning using the demonstration data, and optionally
wherein the imitation learning optimizes a loss of the goal-conditioned policy neural network that is computed using a L2 loss function, a binary cross entropy loss function, or both.

7. The method of any one of claims 1-6, further comprising using a task progress-based function to downscale the losses associated with actions performed in response to intermediate observations characterizing intermediate states of the real-world environment for the particular task,
wherein the losses are downscaled by multiplying the losses with a weight that is below 1.0, and
wherein intermediate states are non-terminal states of the real-world environment that precede the final, goal state in a given one of the training sequences.

8. The method of any one of claims 1-7, further comprising:
maintaining goal observation data comprising (i) demonstration observations characterizing final states of demonstration sequences in the demonstration data and (ii) training observations characterizing final states of training sequences during which the mechanical agent successfully interacted with the real-world environment to reach the goal state of the real-world environment as **characterized by** the goal observation for the training sequence, and optionally
wherein using the demonstration data to determine the one or more new goal observations each characterizing the respective goal state of the real-world environment comprises:
sampling, as the one or more new goal observations, one or more demonstration observations from the goal observation data.

9. The method of any one of claims 1-8, wherein using the demonstration data to determine one or more new goal observations each characterizing the respective goal state of the real-world environment comprises, for each of the plurality of time steps in the training sequence:
selecting, as the new goal observation, a demonstration observation from the demonstration observations included in the one or more demonstration sequences for which a distance between an encoded representation of the training observation received at the time step and an encoded representation of the selected demonstration observation is below a threshold distance.

10. The method of any one of claims 1-9, wherein generating (206) the new training sequence comprises, for each of the new goal observations at the one or more time steps in the training sequence:
generating a sparse reward that is equal to one for a respective training observation for the time step for which the distance between the encoded representation of the respective training observation and the encoded representation of the new goal observation is below the threshold distance.

11. The method of any one of claims 8-10, wherein generating the new training sequence comprises:
generating the new training sequence that includes (i) the one or more new goal observations determined from the demonstration data, (ii) the sparse rewards, and (iii) the plurality of training observations.

12. The method of any one of claims 1-11, wherein the mechanical agent is a dexterous robot manipulator with at least one robotic arm, and the particular task comprises a single or dual arm robotic manipulation task.

13. A computer-implemented method of controlling a mechanical agent to perform a task in a real-world environment, the method comprising repeatedly:
receiving an observation of the real-world environment obtained by one or more sensors,
selecting an action for the mechanical agent to perform based on the observation using a goal-conditioned policy neural network which was trained by a method according to any of claims 1-12, and
controlling the mechanical agent to perform the selected action.

14. A mechanical agent comprising a control system including a goal-conditioned policy neural network which was trained by a method according to any of claims 1-12, the control system being configured to receive an observation from a real-world environment obtained by one or more sensors, the goal-conditioned policy neural network being configured to select an action for the mechanical agent to perform, and the control system being further configured to control the mechanical agent to perform the selected action and perform a task in the real-world environment.

15. One or more computer-readable storage media storing instructions that when executed by one or more computers cause the one or more computers to perform a method according to any one of claims 1-13

16. A system comprising one or more computers and one or more storage devices storing instructions that when executed by the one or more computers cause the one or more computers to perform a method according to any one of claims 1-13.

## Patentansprüche

1. Computerimplementiertes Verfahren zum Trainieren eines Verstärkungslernsystems, umfassend einen mechanischen Agenten und ein zielkonditioniertes neuronales Richtliniennetzwerk zum Auswählen von Aktionen, die von dem mechanischen Agenten durchzuführen sind, der mit einer realen Umgebung interagiert, um eine konkrete Aufgabe durchzuführen, wobei das Verfahren umfasst:
Erhalten (202) einer Trainingssequenz, umfassend eine jeweilige Trainingsbeobachtung bei jedem einer Mehrzahl von Zeitschritten, wobei jede Trainingsbeobachtung als Ergebnis davon empfangen wird, dass der mechanische Agent mit der realen Umgebung interagiert, indem er unter Verwendung des zielkonditionierten neuronalen Richtliniennetzwerks, das eine Mehrzahl von Richtlinienparametern aufweist, gesteuert wird, was den aktuellen Zustand der realen Umgebung veranlasst, in einen neuen Zustand überzugehen, wobei das zielkonditionierte neuronale Richtliniennetzwerk konfiguriert ist, um bei jedem der Mehrzahl von Zeitschritten:
eine Richtlinieneingabe, umfassend eine codierte Darstellung einer aktuellen Beobachtung, die einen aktuellen Zustand der realen Umgebung bei dem Zeitschritt kennzeichnet, und eine codierte Darstellung einer Zielbeobachtung, die einen Zielzustand kennzeichnet, den die reale Umgebung erreichen sollte, damit die Aufgabe erfolgreich abgeschlossen wird, zu empfangen und
die Richtlinieneingabe gemäß den Richtlinienparametern zu verarbeiten, um eine Richtlinienausgabe zu erzeugen, die eine von dem mechanischen Agenten als Reaktion auf die aktuelle Beobachtung und die Zielbeobachtung durchzuführende Aktion definiert;
Erhalten (204) von Demonstrationsdaten, umfassend eine oder mehrere Demonstrationssequenzen, wobei jede Demonstrationssequenz eine Mehrzahl von Demonstrationsbeobachtungen umfasst, die Zustände der realen Umgebung kennzeichnen, während ein demonstrierender Agent mit der realen Umgebung interagiert;
Erzeugen (206) einer neuen Trainingssequenz aus der Trainingssequenz und den Demonstrationsdaten, umfassend:
Verwenden der Demonstrationsdaten, um eine oder mehrere neue Zielbeobachtungen zu bestimmen, von denen jede eine von den Demonstrationsbeobachtungen ist und einen jeweiligen Zielzustand der realen Umgebung in der einen oder den mehreren Demonstrationssequenzen kennzeichnet, und
Erzeugen der neuen Trainingssequenz, die die jeweiligen Trainingsbeobachtungen einschließt, jedoch angibt, dass das zielkonditionierte neuronale Richtliniennetzwerk bei einem oder mehreren Zeitschritten in der Trainingssequenz auf jeweilige codierte Darstellungen jeder der einen oder der mehreren neuen Zielbeobachtungen konditioniert wurde, indem für jeden des einen oder der mehreren Zeitschritte die entsprechende neue Zielbeobachtung oder Zeigerdaten, die auf einen Speicherort zeigen, der die entsprechende neue Zielbeobachtung speichert, eingeschlossen werden; und
Trainieren (208) des zielkonditionierten neuronalen Richtliniennetzwerks mit der neuen Trainingssequenz durch Verstärkungslernen,
wobei jede Beobachtung Daten von einem oder mehreren Sensoren umfasst, die konfiguriert sind, um die reale Umgebung zu erfassen.

2. Verfahren nach Anspruch 1, wobei Erhalten (202) der Trainingssequenz, umfassend die jeweiligen Trainingsbeobachtungen bei jedem der Mehrzahl von Zeitschritten, Folgendes umfasst:
Steuern des mechanischen Agenten unter Verwendung des zielkonditionierten neuronalen Richtliniennetzwerks, damit dieser versucht, die reale Umgebung zu veranlassen, in den durch die Zielbeobachtung gekennzeichneten Zielzustand überzugehen.

3. Verfahren nach einem der Ansprüche 1-2, wobei codierte Darstellungen von Beobachtungen der realen Umgebung in der Richtlinieneingabe durch Verarbeiten der Beobachtungen unter Verwendung eines neuronalen Encoder-Netzwerks erzeugt werden, und optional
ferner umfassend Trainieren des neuronalen Encoder-Netzwerks unter Verwendung von auf kontrastivem Lernen basierenden Trainingstechniken.

4. Verfahren nach einem der Ansprüche 1-3, ferner umfassend Trainieren des zielkonditionierten neuronalen Richtliniennetzwerks mit der erhaltenen Trainingssequenz durch Verstärkungslernen.

5. Verfahren nach einem der Ansprüche 1-4, wobei Trainieren (208) des zielkonditionierten neuronalen Richtliniennetzwerks durch Verstärkungslernen Verwenden einer Richtliniengradiententechnik umfasst.

6. Verfahren nach einem der Ansprüche 1-5, ferner umfassend Trainieren des zielkonditionierten neuronalen Richtliniennetzwerks durch Imitationslernen unter Verwendung der Demonstrationsdaten, und optional
wobei das Imitationslernen einen Verlust des zielkonditionierten neuronalen Richtliniennetzwerks optimiert, der unter Verwendung einer L2-Verlustfunktion, einer binären Kreuzentropie-Verlustfunktion oder beider berechnet wird.

7. Verfahren nach einem der Ansprüche 1-6, ferner umfassend Verwenden einer auf dem Aufgabenfortschritt basierenden Funktion, um die Verluste herunterzuskalieren, die mit Aktionen verknüpft sind, die als Reaktion auf Zwischenbeobachtungen durchgeführt werden, die Zwischenzustände der realen Umgebung für die konkrete Aufgabe kennzeichnen,
wobei die Verluste durch Multiplizieren der Verluste mit einem Gewicht, das unter 1,0 liegt, herunterskaliert werden und
wobei Zwischenzustände nichtterminale Zustände der realen Umgebung sind, die dem finalen Zielzustand in einer gegebenen von den Trainingssequenzen vorausgehen.

8. Verfahren nach einem der Ansprüche 1-7, ferner umfassend:
Aufrechterhalten von Zielbeobachtungsdaten, umfassend (i) Demonstrationsbeobachtungen, die finale Zustände von Demonstrationssequenzen in den Demonstrationsdaten kennzeichnen, und (ii) Trainingsbeobachtungen, die finale Zustände von Trainingssequenzen kennzeichnen, während deren der mechanische Agent erfolgreich mit der realen Umgebung interagiert hat, um den Zielzustand der realen Umgebung zu erreichen, wie er durch die Zielbeobachtung für die Trainingssequenz gekennzeichnet ist, und optional
wobei Verwenden der Demonstrationsdaten, um die eine oder die mehreren neuen Zielbeobachtungen zu bestimmen, von denen jede den jeweiligen Zielzustand der realen Umgebung kennzeichnet, Folgendes umfasst:
Abtasten einer oder mehrerer Demonstrationsbeobachtungen aus den Zielbeobachtungsdaten als die eine oder die mehreren neuen Zielbeobachtungen.

9. Verfahren nach einem der Ansprüche 1-8, wobei Verwenden der Demonstrationsdaten, um eine oder mehrere neue Zielbeobachtungen zu bestimmen, von denen jede den jeweiligen Zielzustand der realen Umgebung kennzeichnet, für jeden der Mehrzahl von Zeitschritten in der Trainingssequenz Folgendes umfasst:
Auswählen einer Demonstrationsbeobachtung als die neue Zielbeobachtung aus den Demonstrationsbeobachtungen, die in der einen oder den mehreren Demonstrationssequenzen eingeschlossen sind, für die ein Abstand zwischen einer codierten Darstellung der bei dem Zeitschritt empfangenen Trainingsbeobachtung und einer codierten Darstellung der ausgewählten Demonstrationsbeobachtung unter einem Schwellenabstand liegt.

10. Verfahren nach einem der Ansprüche 1-9, wobei für jede der neuen Zielbeobachtungen bei dem einen oder den mehreren Zeitschritten in der Trainingssequenz Erzeugen (206) der neuen Trainingssequenz Folgendes umfasst:
Erzeugen einer spärlichen Belohnung, die für eine jeweilige Trainingsbeobachtung für den Zeitschritt, für den der Abstand zwischen der codierten Darstellung der jeweiligen Trainingsbeobachtung und der codierten Darstellung der neuen Zielbeobachtung unter dem Schwellenabstand liegt, gleich eins ist.

11. Verfahren nach einem der Ansprüche 8-10, wobei Erzeugen der neuen Trainingssequenz Folgendes umfasst:
Erzeugen der neuen Trainingssequenz, die (i) die eine oder die mehreren aus den Demonstrationsdaten bestimmten neuen Zielbeobachtungen, (ii) die spärlichen Belohnungen und (iii) die Mehrzahl von Trainingsbeobachtungen einschließt.

12. Verfahren nach einem der Ansprüche 1-11, wobei der mechanische Agent ein geschickter Robotermanipulator mit mindestens einem Roboterarm ist und die konkrete Aufgabe eine Ein- oder Zweiarm-Robotermanipulationsaufgabe umfasst.

13. Computerimplementiertes Verfahren zum Steuern eines mechanischen Agenten, damit dieser eine Aufgabe in einer realen Umgebung durchführt, wobei das Verfahren wiederholt umfasst:
Empfangen einer von einem oder mehreren Sensoren erhaltenen Beobachtung der realen Umgebung,
Auswählen einer von dem mechanischen Agenten durchzuführenden Aktion basierend auf der Beobachtung unter Verwendung eines durch ein Verfahren nach einem der Ansprüche 1-12 trainierten zielkonditionierten neuronalen Richtliniennetzwerks; und
Steuern des mechanischen Agenten, damit dieser die ausgewählte Aktion durchführt.

14. Mechanischer Agent, umfassend ein Steuersystem einschließlich eines durch ein Verfahren nach einem der Ansprüche 1-12 trainierten zielkonditionierten neuronalen Richtliniennetzwerks, wobei das Steuersystem konfiguriert ist, um eine von einem oder mehreren Sensoren erhaltene Beobachtung aus einer realen Umgebung zu empfangen, wobei das zielkonditionierte neuronale Richtliniennetzwerk konfiguriert ist, um eine von dem mechanischen Agenten durchzuführende Aktion auszuwählen, und wobei das Steuersystem ferner konfiguriert ist, um den mechanischen Agenten zu steuern, damit dieser die ausgewählte Aktion durchführt und eine Aufgabe in der realen Umgebung durchführt.

15. Ein oder mehrere computerlesbare Speichermedien, die Anweisungen speichern, die, wenn sie von einem oder mehreren Computern ausgeführt werden, den einen oder die mehreren Computer veranlassen, ein Verfahren nach einem der Ansprüche 1-13 durchzuführen.

16. System, umfassend einen oder mehrere Computer und eine oder mehrere Speichervorrichtungen, die Anweisungen speichern, die, wenn sie von dem einen oder den mehreren Computern ausgeführt werden, den einen oder die mehreren Computer veranlassen, ein Verfahren nach einem der Ansprüche 1-13 durchzuführen.

## Revendications

1. Procédé mis en œuvre par ordinateur d'entraînement d'un système d'apprentissage par renforcement comprenant un agent mécanique et un réseau neuronal à politique conditionnée par un objectif pour sélectionner des actions destinées à être réalisées par l'agent mécanique interagissant avec un environnement du monde réel pour réaliser une tâche particulière, le procédé comprenant :
l'obtention (202) d'une séquence d'entraînement comprenant une observation d'entraînement respective à chacun d'une pluralité de pas de temps, dans lequel chaque observation d'entraînement est reçue à la suite de l'interaction de l'agent mécanique avec l'environnement du monde réel, en étant commandé à l'aide du réseau neuronal à politique conditionnée par un objectif qui a une pluralité de paramètres de politique, ce qui amène l'état actuel de l'environnement du monde réel à passer dans un nouvel état, dans lequel le réseau neuronal à politique conditionnée par un objectif est configuré pour, à chacun de la pluralité de pas de temps :
recevoir une entrée de politique comprenant une représentation codée d'une observation actuelle caractérisant un état actuel de l'environnement du monde réel au pas de temps et une représentation codée d'une observation cible caractérisant un état cible que l'environnement du monde réel devrait atteindre pour que la tâche soit accomplie avec succès, et
traiter l'entrée de politique conformément aux paramètres de politique pour générer une sortie de politique qui définit une action destinée à être réalisée par l'agent mécanique en réponse à l'observation actuelle et à l'observation cible ;
l'obtention (204) de données de démonstration comprenant une ou plusieurs séquences de démonstration, chaque séquence de démonstration comprenant une pluralité d'observations de démonstration caractérisant les états de l'environnement du monde réel pendant qu'un agent de démonstration interagit avec l'environnement du monde réel ;
la génération (206) d'une nouvelle séquence d'entraînement à partir de la séquence d'entraînement et des données de démonstration, comprenant :
l'utilisation des données de démonstration pour déterminer une ou plusieurs nouvelles observations cibles, chacune étant l'une des observations de démonstration caractérisant un état cible respectif de l'environnement du monde réel dans les une ou plusieurs séquences de démonstration, et
la génération de la nouvelle séquence d'entraînement qui comporte les observations d'entraînement respectives, mais indique que le réseau neuronal à politique conditionnée par un objectif a été conditionné sur les représentations codées respectives de chacune des une ou plusieurs nouvelles observations cibles à un ou plusieurs pas de temps dans la séquence d'entraînement, en incluant, pour chacun des un ou plusieurs pas de temps, la nouvelle observation cible correspondante ou des données de pointeur qui pointent vers un emplacement mémoire stockant la nouvelle observation cible correspondante ; et
l'entraînement (208) du réseau neuronal à politique conditionnée par un objectif sur la nouvelle séquence d'entraînement par l'intermédiaire d'un apprentissage par renforcement,
dans lequel chaque observation comprend des données provenant d'un ou plusieurs capteurs configurés pour percevoir l'environnement du monde réel.

2. Procédé selon la revendication 1, dans lequel l'obtention (202) de la séquence d'entraînement comprenant les observations d'entraînement respectives à chacun de la pluralité de pas de temps comprend :
la commande de l'agent mécanique à l'aide du réseau neuronal à politique conditionnée par un objectif pour tenter de faire passer l'environnement du monde réel dans l'état cible **caractérisé par** l'observation cible.

3. Procédé selon l'une quelconque des revendications 1 à 2, dans lequel des représentations codées d'observations de l'environnement du monde réel dans l'entrée de politique sont générées en traitant les observations à l'aide d'un réseau neuronal codeur, et éventuellement
comprenant en outre l'entraînement du réseau neuronal codeur à l'aide de techniques d'entraînement basées sur un apprentissage contrastif.

4. Procédé selon l'une quelconque des revendications 1 à 3, comprenant en outre l'entraînement du réseau neuronal à politique conditionnée par un objectif sur la séquence d'entraînement obtenue par l'intermédiaire d'un apprentissage par renforcement.

5. Procédé selon l'une quelconque des revendications 1 à 4, dans lequel l'entraînement (208) du réseau neuronal à politique conditionnée par un objectif par l'intermédiaire d'un apprentissage par renforcement comprend l'utilisation d'une technique de gradient de politique.

6. Procédé selon l'une quelconque des revendications 1 à 5, comprenant en outre l'entraînement du réseau neuronal à politique conditionnée par un objectif par l'intermédiaire d'un apprentissage par imitation à l'aide des données de démonstration, et éventuellement
dans lequel l'apprentissage par imitation optimise une perte du réseau neuronal à politique conditionnée par un objectif qui est calculée à l'aide d'une fonction de perte L2, d'une fonction de perte d'entropie croisée binaire, ou des deux.

7. Procédé selon l'une quelconque des revendications 1 à 6, comprenant en outre l'utilisation d'une fonction basée sur une progression de tâche pour réduire les pertes associées aux actions réalisées en réponse à des observations intermédiaires caractérisant les états intermédiaires de l'environnement du monde réel pour la tâche particulière,
dans lequel les pertes sont réduites en multipliant les pertes par un poids inférieur à 1,0, et
dans lequel les états intermédiaires sont des états non terminaux de l'environnement du monde réel qui précèdent l'état cible final dans une séquence donnée des séquences d'entraînement.

8. Procédé selon l'une quelconque des revendications 1 à 7, comprenant en outre :
le maintien de données d'observation cible comprenant (i) des observations de démonstration caractérisant les états finaux de séquences de démonstration dans les données de démonstration et (ii) des observations d'entraînement caractérisant les états finaux de séquences d'entraînement au cours desquelles l'agent mécanique a interagi avec succès avec l'environnement du monde réel pour atteindre l'état cible de l'environnement du monde réel tel que **caractérisé par** l'observation cible pour la séquence d'entraînement, et éventuellement
dans lequel l'utilisation des données de démonstration pour déterminer les une ou plusieurs nouvelles observations cibles, chacune caractérisant l'état cible respectif de l'environnement du monde réel, comprend :
l'échantillonnage, en tant que les une ou plusieurs nouvelles observations cibles, d'une ou plusieurs observations de démonstration à partir des données d'observation cible.

9. Procédé selon l'une quelconque des revendications 1 à 8, dans lequel l'utilisation des données de démonstration pour déterminer une ou plusieurs nouvelles observations cibles, chacune caractérisant l'état cible respectif de l'environnement du monde réel, comprend, pour chacun de la pluralité de pas de temps dans la séquence d'entraînement :
la sélection, en tant que nouvelle observation cible, d'une observation de démonstration parmi les observations de démonstration incluses dans les une ou plusieurs séquences de démonstration pour laquelle une distance entre une représentation codée de l'observation d'entraînement reçue au pas de temps et une représentation codée de l'observation de démonstration sélectionnée est inférieure à une distance seuil.

10. Procédé selon l'une quelconque des revendications 1 à 9, dans lequel la génération (206) de la nouvelle séquence d'entraînement comprend, pour chacune des nouvelles observations cibles aux un ou plusieurs pas de temps dans la séquence d'entraînement :
la génération d'une récompense clairsemée qui est égale à un pour une observation d'entraînement respective pour le pas de temps pour lequel la distance entre la représentation codée de l'observation d'entraînement respective et la représentation codée de la nouvelle observation cible est inférieure à la distance seuil.

11. Procédé selon l'une quelconque des revendications 8 à 10, dans lequel la génération de la nouvelle séquence d'entraînement comprend :
la génération de la nouvelle séquence d'entraînement qui comporte (i) les une ou plusieurs nouvelles observations cibles déterminées à partir des données de démonstration, (ii) les récompenses clairsemées et (iii) la pluralité d'observations d'entraînement.

12. Procédé selon l'une quelconque des revendications 1 à 11, dans lequel l'agent mécanique est un manipulateur robotique dextre doté d'au moins un bras robotique, et la tâche particulière comprend une tâche de manipulation robotique à un ou deux bras.

13. Procédé mis en œuvre par ordinateur de commande d'un agent mécanique pour réaliser une tâche dans un environnement du monde réel, le procédé comprenant, de manière répétée :
la réception d'une observation de l'environnement du monde réel obtenue par un ou plusieurs capteurs,
la sélection d'une action que l'agent mécanique doit réaliser sur la base de l'observation, à l'aide d'un réseau neuronal à politique conditionnée par un objectif, qui a été entraîné par un procédé selon l'une quelconque des revendications 1 à 12 ; et
la commande de l'agent mécanique pour réaliser l'action sélectionnée.

14. Agent mécanique comprenant un système de commande comportant un réseau neuronal à politique conditionnée par un objectif qui a été entraîné par un procédé selon l'une quelconque des revendications 1 à 12, le système de commande étant configuré pour recevoir une observation en provenance d'un environnement du monde réel obtenue par un ou plusieurs capteurs, le réseau neuronal à politique conditionnée par un objectif étant configuré pour sélectionner une action que l'agent mécanique doit réaliser, et le système de commande étant en outre configuré pour commander l'agent mécanique pour réaliser l'action sélectionnée et réaliser une tâche dans l'environnement du monde réel.

15. Un ou plusieurs supports de stockage lisibles par ordinateur stockant des instructions qui, lorsqu'elles sont exécutées par un ou plusieurs ordinateurs, amènent les un ou plusieurs ordinateurs à réaliser un procédé selon l'une quelconque des revendications 1 à 13.

16. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser un procédé selon l'une quelconque des revendications 1 à 13.
